(19) Europäisches Patentamt European Patent Office Office européen des brevets

(11) **EP 4 000 920 B1**

(12) **EUROPEAN PATENT SPECIFICATION**

(45) Date of publication and mention of the grant of the patent:
**08.07.2026 Bulletin 2026/28**

(21) Application number: **20208650.0**

(22) Date of filing: **19.11.2020**

(51) International Patent Classification (IPC):
***B32B 7/12*** *(2006.01)*   ***B32B 27/08*** *(2006.01)*
***B32B 27/32*** *(2006.01)*

(52) Cooperative Patent Classification (CPC):
**B32B 27/08; B32B 7/12; B32B 27/32;**
**B32B 27/327;** B32B 2250/03; B32B 2250/05;
B32B 2250/24; B32B 2250/246; B32B 2250/40;
B32B 2270/00; B32B 2307/30; B32B 2307/31;
B32B 2307/546; B32B 2307/581; B32B 2307/72;
(Cont.)

(54) **POLYETHLYENE FILM STRUCTURES FOR SAFER COLLATION-SHRINK FILMS**

POLYETHYLENFOLIENSTRUKTUREN FÜR SICHERERE FEINSCHRUMPFFOLIEN

STRUCTURES DE FILM EN POLYÉTHYLÈNE POUR FILMS RÉTRACTABLES DE REGROUPEMENT SÉCURISÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**25.05.2022 Bulletin 2022/21**

(73) Proprietors:
• **Abu Dhabi Polymers Co. Ltd (Borouge) LLC Abu Dhabi (AE)**
• **Borealis GmbH 1020 Vienna (AT)**

(72) Inventors:
• **DAS, Subrata Kumar Abu Dhabi (AE)**
• **SINGH, Raghvendra Abu Dhabi (AE)**
• **Al TALAFHA, Mohammad Abu Dhabi (AE)**

(74) Representative: **Kador & Partner Part mbB Corneliusstraße 15 80469 München (DE)**

(56) References cited:
EP-B1- 2 415 598     WO-A1-2016/089495
WO-A1-2017/055174     WO-A1-2020/136166
WO-A1-2020/207940     US-A1- 2014 255 674

(52) Cooperative Patent Classification (CPC): (Cont.)
B32B 2307/732; B32B 2307/736; B32B 2553/00

**Description**

The present invention relates to a layered film structure comprising a core layer and external layers, to a process for producing a layered film structure by coextrusion of the layers, to a collation shrink film comprising the layered film structure, and to the use of the collation shrink film wrapping of articles.

Collation shrink films are films structures that are wrapped around an object to be packaged and shrunk to keep the units within the object together. The basic principle of collation shrink is to over-wrap a number of items in a loose film "sleeve" and then pass the wrapped goods through a heated shrink tunnel/oven to cause the collation shrink wrapping to occur. The film collapses around the multiple items and holds them in place. The most common use of these films is in the packaging of multiple containers (items), such as bottles or cans which might contain food, beverages and so on. The collation shrink film is wrapped around a number of the containers, for example a 6-pack of drinks or 24-pack of food cans, optionally held in a cardboard tray or pad, and shrunk around the containers.

Still today up to 5-10% of the merchandise is wasted during transportation. Improving the stability of the wrapped packs with improved collation-shrink film structures would allow the producers to have fewer losses. With today's challenges and overall direction of reducing the film thickness, the pack stability is further compromised.

Thus, for being suitable for use as a collation shrink film, a film structure needs to have a specific combination of properties: First and foremost, the film structure must show a good shrinkage behavior in order to hold the wrapped goods tightly. Today, the majority of the applications typically require 8-15% of shrinkage in transverse direction (TD).

Furthermore, suitable film structures need to have good mechanical properties such as high stiffness, especially in view of down-gauge ability and pack stability, and good tensile properties.

Still further, puncture resistance and tear resistance are among the most important properties for collation shrink films in order to provide sufficient pack stability and to enable safe handling of the package.

Good optical appearance is also required at the same time for the pack stand out on the shelf, i.e. consumer perception at the selling points.

Low Density Polyethylene (LDPE) currently dominates the collation films market segment with its good shrink behaviour, especially in transverse direction (TD). It is known, however, that multimodal LLDPE exhibits significant benefits over LDPE when blended with other linear low density polyethylene and high density polyethylene components.

Thus, current collation shrink film solutions are film structures comprising LDPE and LLDPE and/or HDPE. The LDPE is necessary to give a high shrink rate and the LLDPE / HDPE component gives a combination of stiffness, toughness and bundling force (also known as cold shrink force).

For example, WO 2017/055174 discloses a collation shrink film which is based on a coextruded film structure comprising two layers A and B each made from specific ethylene (co-)polymers.

Furthermore, WO 2016/177621 discloses collation shrink films comprising a layer of foamed LDPE (density reducing bubbles) or, optionally, $\geq$ 50% LDPE with LLDPE and another layer with at least 75% LLDPE, having a $MFR_2$ of 0.05 to 10 g/10min and density 0.915 to 0.940 $g/cm^3$.

WO 2020/207940 A1 relates to multilayer collation shrink film which has good optical surface layer properties, a good shrink behaviour and a good balance between holding force and cold shrink properties.

It is an object of the present invention to provide a film structure suitable for use as a collation shrink film which fulfils the above requirements, especially a film structure which has an improved stability, shrinkage behavior and, at the same time, an excellent optical appearance so as to enable, for example, a down-gauging of the required film thickness.

The present invention is based on the finding that such a film structure for a collation shrink film can be provided by a film structure comprising a core and two external layers which comprise specifically components.

The present invention therefore provides a layered film structure comprising, or consisting of, a core layer C and external layers E1 and E2 wherein core layer C comprises, or consists of,

a) a high-pressure produced polyethylene component (AC) which is a LDPE having an $MFR_2$ of from 0.25 to 2 g/10min and a density of 0.915 to 0.930 $g/cm^3$ in an amount of from 40 to 80 wt.% of the core layer and

b) a catalytically produced polyethylene component (BC) which is either a ethylene polymer having an $MFR_2$ of from 0.5 to 10 g/10min and a density of 0.910 to 0.935 $g/cm^3$ (BC1) and/or an ethylene polymer having an $MFR_2$ of from 0.05 to 0.4 g/10min and a density of 0.925 to 0.945 $g/cm^3$ (BC2) in a total amount of from 20 to 40 wt.% of the core layer, and

c) a catalytically produced polyethylene component (CC) which is a polyethylene having an $MFR_2$ of from 0.2 to 2 g/10min and a density of from 0.950 to 0.970 $g/cm^3$ in an amount of from 0 to 30 wt.% of the core layer,

and wherein external layer(s) E1 and/or E2 comprise(s), or consists of,

a) a high-pressure produced polyethylene component (AE) which is a LDPE having an $MFR_2$ of from 0.25 to 2 g/10min and a density of 0.915 to 0.930 g/cm$^3$, and

b) a catalytically produced polyethylene component (BE) which is either a multimodal ethylene terpolymer having an MFR$_2$ determined according to ISO 1133 of from 0.5 to 10 g/10min and a density of 0.920 to 0.933 g/cm$^3$ (BE1) and/or an ethylene polymer having an MFR$_2$ determined according to ISO 1133 of from 0.05 to 0.4 g/10min and a density of 0.925 to 0.945 g/cm$^3$ (BE2) in a total amount of from 40 to 85 wt.% of the external layer .

The combination of a core layer C and external layers E1 and E2 as characterized above solve the above described objects. In particular, the layered films of the invention have an improved stiffness (better tensile modulus in the range of 320-500 MPa in machine direction) and superior puncture resistance which is beneficial for down-gauging of films. Furthermore, the film structures show good heat resistance (higher SIT - seal initiation temperature, in the range of 105 - 120 $^0$C) so that they have better packaging efficiency in the shrink tunnels, and simultaneously good optical properties.

Due to the improved shrinkage behavior and mechanical properties, the thickness may be down-gauged (reduced) when the film structure is used as a collation shrink film, in particular allowing for low thickness packaging (<50 micrometer, such as 45 micrometer).

The expression "catalytically produced" polyethylene denotes polyethylenes which have been produced in a process using a catalyst, such as a Ziegler-Natta or a metallocene catalyst, preferably have been produced in a process using a metallocene catalyst.

Preferably, in the film structure of the invention ethylene polymer component BC1 is a multimodal ethylene terpolymer.

In a preferred embodiment external layers E1 and/or E2 consist(s) of components AE and BE.

In the following, preferred embodiments of the multimodal ethylene terpolymer of component BC1 and/or BE1 are described. The multimodal ethylene terpolymer may be selected from anyone of these embodiments independently for component BC1 and/or component BE1. The selected embodiment may also be the same for BC1 and BE1.

The multimodal terpolymer comprises, or consists of, a multimodal polymer of ethylene with at least two different comonomers selected from alpha-olefins having from 4 to 10 carbon atoms, which has a ratio MFR$_{21}$/MFR$_2$ of 13 to 30 and a MWD of 5 or less.

The multimodal ethylene terpolymer of component (BC1) and/or (BE1) preferably comprises, or consists of, a multimodal polymer of ethylene with at least two different comonomers selected from alpha-olefins having from 4 to 10 carbon atoms, which has a ratio MFR$_{21}$/MFR$_2$ of 13 to 30 and a MWD of 5 or less.

Such multimodal ethylene terpolymers are disclosed, for example, in WO 2016/083208. As far as definitions (such as for the "modality" of a polymer) and production methods for these ethylene terpolymers are concerned it is referred to WO 2016/083208. Furthermore, all embodiments and preferred embodiments of such ethylene terpolymers as described in 2016/083208 which have a density in the range a density of 0.910 to 0.935 g/cm$^3$ are also preferred embodiments of the multimodal ethylene terpolymer of component (BC1) and/or (BE1) in the present application, whether or not explicitly described herein.

The multimodal ethylene terpolymer preferably has a MFR$_2$ in the range of from 0.5 to 2.5 g/10min, and particularly preferred from 1.0 to 1.8 g/10min.

Preferably, multimodal ethylene terpolymer has a density of 0.920 to 0.933 g/cm$^3$, more preferably of 0.923 to 0.930 g/cm$^3$.

Multimodal ethylene terpolymer preferably has a ratio MFR$_{21}$/MFR$_2$ of 13 to 30, more preferably of 15 to 25.

The at least two alpha-olefin comonomers having from 4 to 10 carbon atoms of multimodal ethylene terpolymer are preferably 1-butene and 1-hexene.

Preferably, the total amount of comonomers present in the multimodal ethylene terpolymer is of 0.5 to 10 mol%, preferably of 1.0 to 8 mol%, more preferably of 1.0 to 5 mol%, more preferably of 1.5 to 5.0 mol% and most preferably 1.1 to 3.0 mol%.

Multimodal ethylene terpolymer, which preferably is a bimodal terpolymer, preferably comprises, or consists of, an ethylene polymer component (A) and an ethylene polymer component (B).

Preferably, ethylene polymer component (A) has higher MFR$_2$ than ethylene polymer component (B).

More preferably, the ethylene polymer component (A) has MFR$_2$ of 1 to 50 g/10 min, preferably of 1 to 40 g/10 min, more preferably of 1 to 30 g/10 min, more preferably of 2 to 20 g/10 min, more preferably of 2 to 15 g/10 min, and even more preferably of 2 to 10 g/10 min.

The ratio of the MFR$_2$ of ethylene polymer component (A) to the MFR$_2$ of the ethylene polymer component (B) preferably is 2 to 50, preferably 5 to 40, more preferably 10 to 30, more preferably 10 to 25, and still more preferably 11 to 25.

The ratio of the MFR$_2$ of ethylene polymer component (A) to the MFR$_2$ of the final multimodal terpolymer preferably is of 2 to 10.

Preferably, ethylene polymer component (A) comprises a different comonomer than the ethylene polymer (B).

Preferably, ethylene polymer component (A) has lower amount (mol%) of comonomer than ethylene polymer component (B), more preferably, the ratio of [the amount (mol%) of alpha-olefin comonomer having from 4 to 10 carbon atoms comonomer present in ethylene polymer component (A)] to [the amount (mol%) of at least two alpha-olefin comonomers having from 4 to 10 carbon atoms of the final multimodal ethylene terpolymer] is of 0.2 to 0.6, preferably of 0.25 to 0.5.

Preferably, the alpha-olefin comonomer having from 4 to 10 carbon atoms of ethylene polymer component (A) is 1-butene and the alpha-olefin comonomer having from 4 to 10 carbon atoms of ethylene polymer component (B) is 1-hexene.

The amount of comonomer in component (A) is preferably from 0.15 to 1.0 mol%.

Preferably, the amount of comonomer in component (B) is 1.5 to 3.5 mol%.

Preferably, ethylene polymer component (A) has different, preferably higher, density than the density of the ethylene polymer component (B).

The density of the ethylene polymer component (A) is preferably 0.925 to 0.950 $g/cm^3$, more preferably 0.930 to 0.945 $g/cm^3$, and most preferably 0.935 to 0.940 $g/cm^3$.

Preferably, the multimodal ethylene terpolymer comprises the ethylene polymer component (A) in an amount of 30 to 70 wt.%, preferably of 40 to 60 wt.%, more preferably of 35 to 50 wt.%, more preferably 40 to 50 wt.% and the ethylene polymer component (B) in an amount of 70 to 30 wt.%, preferably of 60 to 40 wt.%, more preferably of 50 to 65 wt.%, more preferably 50 to 60 wt.%, based on the total amount (100 wt.%) of the multimodal ethylene terpolymer.

Most preferably, multimodal ethylene terpolymer consists of the ethylene polymer components (A) and (B) as the sole polymer components. Accordingly, the split between ethylene polymer component (A) to ethylene polymer component (B) is of (30 to 70):(70 to 30) preferably of (40 to 60):(60 to 40), more preferably of (35 to 50):(65 to 50), more preferably of (40 to 50):(50 to 60).

In a particularly preferred embodiment, multimodal terpolymer is a bimodal terpolymer, i.e. comprises a low molecular weight and a high molecular weight component, and has a $MFR_2$ of 1.0 to 1.8 g/10 min, and/or an $MFR_5$ of 2.8 to 4.5 g/10 min and/or a $MFR_{21}$ of 20 to 36 g/10 min, and/or a density of 0.925 to 0.929 $g/cm^3$, and/or a molecular weight distribution (MWD) of 3.0 to 5.0, and/or a $M_n$ of 15 to 25 kg/mol, and/or a $M_w$ of 70 to 125 kg/mol, and/or a $MFR_{21}/MFR_2$ ratio ($FRR_{21/2}$) of 15 to 25 and/or a $MFR_{21}/MFR_5$ ratio ($FRR_{21/5}$) of 6 to 9.

All molecular weight parameters are measured by GPC conventional method as further described in detail below.

Preferred as multimodal ethylene terpolymers are also such commercially available as Anteo™ from Borealis or Borouge having the properties as required herein.

Core layer C of the layered film structure of the invention further comprise a low density polyethylene (LDPE) as component AC. LDPEs are well known in the art and are produced in high pressure process usually performed in a tubular reactor or an autoclave.

LDPEs and their production are, for example, described in WO 2017/055174, page 9, line 29 to page 12, line 6, to which it is referred.

The LDPE of component AC preferably has a density of 0.918 to 0.928 $g/cm^3$, more preferably of 0.919 to 0.927 $g/cm^3$, and most preferably of 0.920 to 0.925 $g/cm^3$.

Preferably, the LDPE of component AC has a $MFR_2$ of 0.3 to 1.7 g/10min, more preferably of 0.4 to 1.5 g/10min, and most preferably of 0.5 to 1.0 g/10min.

In a particularly preferred embodiment, the LDPE of component AC has a $MFR_2$ of 0.5 to 1.0, and/or a density of 0.920 to 0.925 $g/cm^3$, and/or a MWD of 5 to 8, and/or $M_n$ of 12 to 18 kg/mol, and/or a $M_w$ of 85 to 130 kg/mol.

All molecular weight parameters are measured by GPC viscosity method as further described in detail below.

As LDPE of component AC, resin FT5230 as produced by Borealis may be used.

In some embodiments of the film structure, component CC is not present in core layer C.

Layer C then preferably consists of components AC and BC (BC1 and/or BC2).

In other embodiments, component CC is present in the core layer and it is a high density polyethylene (HDPE) with a density of 0.950 to 0.970 $g/cm^3$. HDPEs are also well known in the art and are usually produced in polymerization processes using a catalyst.

In such embodiments core layer C preferably consists of components AC, BC (BC1 and/or BC2) and CC.

Preferably, if component CC (HDPE) is present in the core layer, it is used in an amount of 10 to 30 wt.%, more preferably of 15 to 25 wt.%.

The HDPE of component CC preferably has a density of 0.955 to 0.968 $g/cm^3$, more preferably of 0.958 to 0.965 $g/cm^3$.

Preferably, the HDPE of component C is an ethylene copolymer.

Preferably, the HDPE of component C has a $MFR_2$ of 0.25 to 1.8 g/10min, more preferably of 0.3 to 1.5 g/10min, still more preferably 0.4 to 1 g/10 min, and most preferably 0.5 to 0.9 g/10min.

In a particularly preferred embodiment, the HDPE of component C has a $MFR_2$ of 0.5 to 0.9 g/10 min, and/or an MFRs of 2.0 to 3.5 g/10 min and/or a $MFR_{21}$ of 30 to 50 g/10 min, and/or a density of 0.958 to 0.965 $g/cm^3$, and/or a

molecular weight distribution (MWD) of 10 to 15, and/or a $M_n$ of 7 to 12 kg/mol, and/or a $M_w$ of 100 to 165 kg/mol, and/or a $MFR_{21}/MFR_2$ ratio ($FRR_{21/2}$) of 50 to 75 and/or a $MFR_{21}/MFR_5$ ratio ($FRR_{21/5}$) of 10 to 25.

All molecular weight parameters are measured by GPC conventional method as further described in detail below.

As HDPE of component C, resin Borstar FB5600 as produced by Borouge may be used.

Component BC2 as it may be present in core layer C is a medium density polyethylene (MDPE) with a density of 0.925 to 0.945 g/cm$^3$. Such MDPEs are also well known in the art and are usually produced in polymerization processes using a catalyst.

The MDPE of component BC2 preferably has a density of 0.930 to 0.940 g/cm$^3$, more preferably of 0.932 to 0.938 g/cm$^3$.

Preferably, the MDPE of component BC2 is an ethylene co-polymer.

Preferably, the MDPE of component BC2 has a $MFR_2$ of 0.06 to 0.35 g/10min, more preferably of 0.08 to 0.30 g/10min, and most preferably 0.10 to 0.20 g/10min.

In a particularly preferred embodiment, the MDPE of component BC2 has a $MFR_2$ of 0.10 to 0.20 g/10 min, and/or an $MFR_5$ of 0.40 to 0.80 g/10 min and/or a $MFR_{21}$ of 10 to 20 g/10 min, and/or a density of 0.932 to 0.938 g/cm$^3$, and/or a molecular weight distribution (MWD) of 15 to 35, and/or a $M_n$ of 8 to 12 kg/mol, and/or a $M_w$ of 150 to 280 kg/mol, and/or a $MFR_{21}/MFR_2$ ratio ($FRR_{21/2}$) of 80 to 150 and/or a $MFR_{21}/MFR_5$ ratio ($FRR_{21/5}$) of 20 to 30.

All molecular weight parameters are measured by GPC conventional method as further described in detail below.

As MDPE of component BC2, resin Borstar FB1350 as produced by Borealis or Borouge may be used.

External layer(s) E1 and E2 of the layered film structure of the invention may be made of the same polymer composition or of different polymer compositions in any one of the embodiments described herein for the polymer composition usable for layer E1 and/or E2. Preferably, E1 and E2 are made of the same polymer composition.

Preferably, high-pressure produced polyethylene LDPE of component AE as used in external layer(s) is selected from any one of the embodiments as described herein above for LDPE component AC.

Preferably, the medium density polyethylene of component BE2 as used in external layer(s) is selected from any one of the embodiments as described herein above for the MDPE of component BC2.

External layer(s) E1 and/or E2 preferably consist(s) of components AE and BE in any one of the embodiments as described herein.

The layered film structure according to the invention may consist of core layer C and external layers E1 and E2, but it may also further comprise one or more intermediate layer(s) I between core layer C and one of external layers E1 and/or E2, for example in a five layer film structure E1/I1/C/I2/E2.

If present, intermediate layer(s) I preferably comprise, or consist of, a LDPE for example in any one of the embodiments described for the LDPE of component AC.

The LDPE used in layer(s) I preferably has a density of 0.905 to 0.945 g/cm$^3$, more preferably of 0.915 to 0.935 g/cm$^3$, and most preferably of 0.918 to 0.927 g/cm$^3$.

Preferably, the LDPE used in layer(s) I has a $MFR_2$ of 0.05 to 10 g/10min, more preferably of 0.1 to 5 g/10min, still more preferably 0.2 to 3 g/10 min, and most preferably 0.4 to 1.5 g/10min.

If more than one intermediate layer I is present it may be made of the same or different material.

The layered film structure of the invention according to any one of the embodiments described herein preferably has a thickness of 75 micrometer or less, more preferably 60 micrometer or less, more preferably 50 micrometer or less, such as 45 micrometer.

Core layer C in the layered film structure of the invention preferably has a thickness of 25 to 75 % of the total film structure thickness, more preferably of 30 to 70 % of the total film thickness, and most preferably of 40 to 60 % of the total film thickness.

External layer(s) E1 and/or E2 has/have each preferably a thickness of 5 to 35 % of the total film structure thickness, more preferably of 15 to 30 %.

If the film structure of the invention consists of layers E1, I1, C, I2 and E2 preferably external layers E1 and/or E2 has/have each a thickness of 5 to 20 % of the total film structure thickness, more preferably of 7.5 to 15 % of the total film thickness.

The film structure of the invention has good/improved mechanical properties.

Accordingly, the film structure preferably has a shrinkage in oil at 160 °C in transverse direction measured on a 60 micrometer thick film of 10 % or higher, more preferably of 12 % or higher.

The film structure of the invention preferably has a tensile modulus (1% secant) in machine direction (MD) of 320 to 500 MPa.

Furthermore, the film structure of the invention preferably has a tensile modulus (1% secant) in transverse direction (TD) of 320 to 500 MPa.

Still further, the film structure preferably has a tensile strength at break in transverse direction (TD) of at least 35 MPa.

The film structure of the invention has also good/improved puncture resistance and sealing properties.

Accordingly, the film structure of the invention preferably has a puncture resistance measured as a puncture energy on a 60 micrometer thick film of at least 2.5 J, more preferably at least 2.7 J.

Furthermore, the film structure of the invention preferably has a puncture resistance measured as a puncture energy on a 45 micrometer thick film of at least 1.7 J, more preferably at least 1.9 J.

The film structure of the invention preferably has a seal initiation temperature of from 105 to 125 °C, more preferably from 109 °C to 123 °C.

The present invention also relates to a process for producing a layered film structure according to any one of the preceding claims wherein the layers of the film structure are co-extruded.

The different polymer components in any of layers of the film are typically intimately mixed prior to layer formation, for example using a twin screw extruder, preferably a counter-rotating extruder or a co-rotating extruder. Then, the blends are converted into a coextruded film structure. Preferably, the blends are converted into a coextruded film structure on a blown-film line.

In order to manufacture such multilayer films according to the invention, normally at least two polymer melt streams are simultaneously extruded (i.e. coextruded) through a multi-channel tubular, annular or circular die to form a tube which is blown-up, inflated and/or cooled with air (or a combination of gases) to form a film. The manufacture of blown film is a well-known process.

The blown (co-)extrusion can be effected at a temperature in the range 160°C to 240°C, and cooled by blowing gas (generally air) at a temperature of 10 to 50°C to provide a frost line height of 1 to 8 times the diameter of the die.

The blow up ratio (BUR) should generally be in the range 1.2 to 6, preferably 1.5 to 4.

The layered film structure of the invention may also have been subjected to a stretching step, wherein the film after its production is stretched in the machine direction (MDO). Stretching may be carried out by any conventional technique using any conventional stretching devices which are well known to those skilled in the art.

The present invention also relates to a collation shrink film comprising or consisting of a layered film structure according to any one of the embodiments as described herein, and to the use of said collation shrink film for wrapping of articles.

In the following, the invention will further be illustrated by way of examples which refer to the following figures which show:

Figure 1: Film shrinkage (%) measured at 160 $^0$C silicon oil bath
Figure 2: Haze (%) of the film samples
Figure 3: Gloss@60$^0$ of the film samples
Figure 4: Tensile strength and Tensile modulus (1% secant) of the film samples
Figure 5: Puncture resistance and SIT of the film samples.

**Measurement and Determination Methods**

**a)** Measurement of melt flow rate MFR

The melt flow rate (MFR) is determined according to ISO 1133 and is indicated in g/10 min. The higher the melt flow rate, the lower the viscosity of the polymer. The MFR is determined at 190 °C for polyethylene and at a loading of 2.16 kg ($MFR_2$), 5.00 kg (MFRs) or 21.6 kg ($MFR_{21}$).

The quantity FRR (flow rate ratio) is an indication of molecular weight distribution and denotes the ratio of flow rates at different loadings. Thus, $FRR_{21/5}$ denotes the value of $MFR_{21}/MFR_5$ and $FRR_{21/2}$ denotes the value of $MFR_{21}/MFR_2$.

**b)** Density

Density of the polymer was measured according to ISO 1183-1:2004 (method A) on compression moulded specimen prepared according to EN ISO 1872-2 (Feb 2007) and is given in g/cm$^3$.

**c)** GPC

*1) GPC conventional method*

Molecular weight averages ($M_z$, $M_w$ and $M_n$), molecular weight distribution (MWD) and its broadness, described by polydispersity index, PDI= $M_w/M_n$ (wherein $M_n$ is the number average molecular weight and $M_w$ is the weight average molecular weight) were determined by Gel Permeation Chromatography (GPC) according to ISO 16014-1:2003, ISO 16014-2:2003, ISO 16014-4:2003 and ASTM D 6474-12 using the following formulas:

$$M_n = \frac{\sum_{i=1}^{N} A_i}{\sum_{i=1}^{N} (A_i/M_i)} \quad (1)$$

$$M_w = \frac{\sum_{i=1}^{N} (A_i \times M_i)}{\sum_{i=1}^{N} A_i} \quad (2)$$

$$M_z = \frac{\sum_{i=1}^{N} (A_i \times M_i^2)}{\sum_{i=1}^{N} (A_i \times M_i)} \quad (3)$$

For a constant elution volume interval $\Delta V_i$, where $A_i$, and $M_i$ are the chromatographic peak slice area and polyolefin molecular weight (MW), respectively associated with the elution volume, $V_i$, where N is equal to the number of data points obtained from the chromatogram between the integration limits.

A high temperature GPC instrument, equipped with either infrared (IR) detector (IR4 or IR5 from PolymerChar (Valencia, Spain) or differential refractometer (RI) from Agilent Technologies, equipped with 3 x Agilent-PLgel Olexis and 1x Agilent-PLgel Olexis Guard columns was used. As mobile phase 1,2,4-trichlorobenzene (TCB) stabilized with 250 mg/L 2,6-Di tert butyl-4-methylphenol) was used. The chromatographic system was operated at column temperature of 160 °C and detector at 160 °C and at a constant flow rate of 1 mL/min. 200 $\mu$L of sample solution was injected per analysis. Data collection was performed using either Agilent Cirrus software version 3.3 or PolymerChar GPC-IR control software.

The column set was calibrated using 19 narrow MWD polystyrene (PS) standards in the range of 0,5 kg/mol to 11 500 kg/mol. The PS standards were dissolved at room temperature over several hours. The conversion of the polystyrene peak molecular weight to polyolefin molecular weights is accomplished by using the Mark Houwink equation and the following Mark Houwink constants:

$$K_{PS} = 19 \times 10^{-3} \text{ mL/g}, \quad \alpha_{PS} = 0.655$$

$$K_{PE} = 39 \times 10^{-3} \text{ mL/g}, \quad \alpha_{PE} = 0.725$$

A third order polynomial fit was used to fit the calibration data.

All samples were prepared in the concentration range of around 1 mg/ml and dissolved at 160 °C for 3 (three) hours for PE in fresh distilled TCB stabilized with 250 ppm Irgafos168 under continuous gentle shaking

*(2) GPC viscosity method*

Molecular weight averages ($M_z$, $M_w$ and $M_n$), Molecular weight distribution (MWD) of LDPE is measured by GPC-viscosity method using universal calibration. Molecular weight averages ($M_w$, $M_n$), Molecular weight distribution (MWD) and its broadness, described by polydispersity index, PDI= $M_w/M_n$ (wherein $M_n$ is the number average molecular weight and $M_w$ is the weight average molecular weight) were determined by Gel Permeation Chromatography (GPC) according to ISO 16014-4 2019. A PL 220 (Polymer Laboratories) GPC equipped with an IR4 infrared detector, an online four capillary bridge viscometer (PL-BV 400-HT) was used. 3x Olexis and 1x Olexis Guard columns from Polymer Laboratories as stationary phase and 1,2,4-trichlorobenzene (TCB, stabilized with 250 mg/L 2,6-Di tert butyl-4-methyl-phenol) as mobile phase at 160 °C and at a constant flow rate of 1 mL/min was applied. 200 $\mu$L of sample solution were injected per analysis. The corresponding detector constant of the viscometer as well as the inter-detector delay volumes were determined with a narrow PS standard (MWD = 1.01) with a molar mass of 132900 g/mol and an intrinsic viscosity of 0.4789 dl/g. The detector constant of the IR4 detector was determined using NIST1475a with dn/dc of 0.094 cm$^3$/g.

The column set was calibrated using universal calibration (according to ISO 16014-2:2019) with at least 15 narrow MWD polystyrene (PS) standards in the range of 0.5 kg/mol to 11 600 kg/mol. The corresponded intrinsic viscosities of the PS standards were calculated from their corresponding concentration (IR4), online viscometer signals, and determined detector constants for polystyrene. For low molecular weight PS with a molar mass below 3000 g/mol the initial weight out concentration is used, due to end group effects in the IR detector.

The molecular weight of the sample ($M_2$) at each chromatographic slice using the universal calibration approach can be calculated by following correlation:

$$\log M_1 [\eta_1] = V_R = \log M_2 [\eta_2]$$

with:

M$_1$ Molar mass of PS
$\eta_1$ intrinsic viscosity of the PS
M$_2$ Molar mass of sample
$\eta_2$ intrinsic viscosity of sample
V$_R$ Retention volume

All data processing and calculation was performed using the Cirrus Multi-Offline SEC-Software Version 3.2 (Polymer Laboratories a Varian inc. Company).

All samples were prepared by dissolving 5.0 - 9.0 mg of polymer in 8 mL (at 160 °C) of stabilized TCB (same as mobile phase) for 2.5 hours for PP or 3 hours for PE at max. 160°C under continuous gentle shaking.

**d)** Film Shrinkage

Based on the ISO 11501, this test method is performed to determine dimensional changes of plastic films and sheeting in both machine and transverse directions. Film samples of 60x60mm specimen are cut randomly from different film area and conditioned at 23±2°C and 50±5 % relative humidity prior to the testing. Film samples is exposed to heating medium; keep inside the silicone oil bath at 160°C for 15 seconds and then cooled at room temperature and measure the shrinkage percentage based on dimensional changes both in machine direction and transverse direction.

**e)** Mechanical Properties

Tensile Modulus

Film tensile properties are measured at 23°C according to ISO 527-3 with a specimen Type 2 using 60 / 45 micrometer thick blown film. Tensile modulus in machine direction (MD) and Tensile modulus in transverse direction (TD) were measured as 1% secant modulus with 5mm/min test speed and 50mm gauge length according to ASTM D882. Tensile stress at break were measured according to ISO 527-3 specimen Type 2 with 50mm gauge length and 500 mm/min test speed.

**f)** Optical Properties

Gloss, clarity and haze as measures for the optical appearance of the films were determined according to ASTM D2457 (gloss) and ASTM D1003 (haze and clarity). Gloss was determined according to ISO 2813 (ASTM D2457) at an angle of 20°, 60° or 85° accordingly.

**g)** Puncture resistance

Protrusion Puncture Resistance testing is conducted according to ASTM D5748 on 60/45 micron blown films. This test method determines the resistance of a film sample to the penetration of a probe with specific size of 19mm diameter pear-shaped TFE fluorocarbon coated at a standard low rate, a single test velocity (250 mm/min). Performed at standard conditions, the test method imparts a biaxial stress loading. Cut the film specimens 150mmx150mm to fit into the jig and conditioning done at 23±20C at 50±5% relative humidity.

The Puncture Resistance Force (N) is the maximum force or highest force observed during the test and Puncture Resistance Energy (J) is the energy used until the probe breaks the test specimen, both are measured using the high accuracy 500N loadcell and crosshead position sensor.

**h)** Seal initiation temperature (SIT)

In principle, heat seal is formed by bonding two films (polymeric) in the way that surfaces are pressed together into a close contact while being at least in partially molten. This test method also covers the evaluation part after the heat seal process is performed. The force required to separate a test strip of material containing the seal is measured using UTM (also to identifies the mode of specimen failure). Following the ASTM F 2029; ASTM F 88 standard, a tested specimen with a preferred film thickness of 60/45 microns where the sealed surfaces are selected. Samples should be conditioned for at least 48hrs in the case of PE after sealing at 23±2°C and 50±5 % relative humidity. For testing, a minimum of five specimens shall be used for each seal temperature.

**Examples**

Three-layered film structures (three according to the invention and two comparative) were produced. The inventive resin's processability and multilayer film properties were evaluated on large scale blown film equipment (Polyrema machinery) in comparison to reference comparative examples. The inventive films were very easy to process and exhibited good bubble stability.

The performance of the produced film structures was analysed on 60 micron thick blown films produced at the process operating conditions with die-gap of 1.8 mm, lower neck-height and blow up ratio of 3:1. In addition, for inventive examples 1 and 2 also film structures with a total thickness of 45 microns were produced.

The polymers used for making the layered film structures of the invention and of the comparative examples are given in Table 1 below.

Table 1:

| Resin name | Producer | Type | MFR$_2$ (g/10min) | Density (kg/m$^3$) | Slip & antiblock |
|---|---|---|---|---|---|
| MDPE1 | | Bimodal 1-butene,1-hexene ethylene terpolymer | 1.3 | 927 | No |
| Borstar FB1350 | Borealis/Borouge | Bimodal MDPE | 0.15 | 935 | No |
| Borstar FB5600 | Borouge | Bimodal ethylene copolymer | 0.7 | 960 | No |
| FT5230 | Borealis/Borouge | Tubular LDPE | 0.75 | 923 | No |
| Enable 3505CH | ExxonMobil | Metallocene ethylene 1-hexene co-polymer | 0.50 | 935 | No |
| Enable 2703MC | ExxonMobil | Metallocene ethylene 1-hexene co-polymer | 0.3 | 927 | No |
| Exceed 1327MD | ExxonMobil | ethylene 1-hexene copolymer | 1.3 | 927 | 1300 ppm slip additive; 750 ppm antiblock additive |

The composition and structure of the layered films produced are given in Table 2. The thickness of the layers is given in % of the total thickness of the film. All films produced had a total thickness of 60 microns (IE1a, IE2a, IE3, CE1 and CE2), and for IE1 and IE2 also films having a thickness of 45 microns were produced (IE1b and IE2b, respectively).

In Table 2 "E" means external layer, and "C" means core layer. The external layers of the films produced had each the same composition and thickness.

Table 2:

| Example | Layer structure | Total density | Core Layer Composition: polymers/amount wt.% | | Core layer thickness; | External Layer Composition: Polymers/amount wt.% | | External layers thickness; |
|---|---|---|---|---|---|---|---|---|
| IE 1 | E/C/E | 0.928 | FT5230 MDPE1 FB5600 | 50 30 20 | 50%; | FT5230 MDPE1 | 50 50 | 25%; |
| IE2 | E/C/E | 0.928 | FT5230 MDPE1 | 75 25 | 50%; | FT5230 FB1350 | 25 75 | 25%; |
| IE3 | E/C/E | 0.927 | FT5230 FB1350 | 75 25 | 50%; | FT5230 MDPE1 | 25 75 | 25%; |

(continued)

| Example | Layer structure | Total density | Core Layer Composition: polymers/amount wt.% | | Core layer thickness; | External Layer Composition: Polymers/amount wt.% | | External layers thickness; |
|---|---|---|---|---|---|---|---|---|
| CE1 | E/C/E | 0.926 | FT5230 Enable3505 | 50 50 | 50%; | FT5230 Exceed1327 | 75 25 | 25%; |
| CE2 | E/C/E | 0.926 | FT5230 Enable3505 | 50 50 | 50%; | FT5230 Enable2703 | 75 25 | 25%; |

Any polyethylene blend used in the above described layers can be produced by any suitable conventional multi-layer film extrusion line, preferably at a temperature of 160 to 240 $^0$C, more preferably at 160 to 230$^0$C. All the polyethylene films were produced on a Polyrema (Reifenhauser multilayer blown film line with internal bubble cooling system) having an output of 150 kgs/hr and cooling air temperature were in between 12 to 20 $^0$C. Outer layer and inner sealing layers consists of 25% and core layer 50% of total film thickness. The blown film line had the following properties as listed in Table 3 as follows:

Table 3:

| Blown film line parameters | |
|---|---|
| Die diameters | 180 mm |
| Die gap | 1.8 mm |
| Blow up ratio (BUR) | 3.0 : 1 |
| Bubble cooling | IBC |

The temperature profile of the blown film line i.e., the temperatures ($^0$C) used for different locations of the blown film lines are as follows:

| Layer | Extruder zone 1 | Extruder zone 2 | Extruder zone 3 | Extruder zone 4 | Extruder zone 5 | Post Extruder zone 6 | Post Extruder zone 7 | Post Extruder zone 8 |
|---|---|---|---|---|---|---|---|---|
| External Outer Layer | 160 | 200 | 195 | 190 | 185 | 190 | 200 | 200 |
| Core/middle Layer | 160 | 200 | 210 | 210 | 210 | 210 | 200 | 200 |
| External Inner layer | 160 | 200 | 195 | 190 | 185 | 195 | 200 | 200 |

Table 4 lists the melt temperature profile of the blown film line for different layers of the blown film extruders and respective melt pressure. The films were produced using a slightly different process temperature in order to optimize film aesthetics (gloss and transparency/haze) and to deliver stable production.

Table 4:

| | CE1 | CE2 | IE1 | IE2 | IE3 |
|---|---|---|---|---|---|
| Outer layer extruder temperature Melt temperature ($^0$C) Melt pressure (bar) | 204 195 | 204 201 | 207 219 | 218 336 | 195 228 |
| Core/Middle layer extruder temperature Melt temperature ($^0$C) Melt pressure (bar) | 216 222 | 215 221 | 214 253 | 206 251 | 209 246 |

(continued)

| Inner layer extruder temperature | | | | | |
|---|---|---|---|---|---|
| Melt temperature ($^0$C) | 206 | 207 | 208 | 218 | 196 |
| Melt pressure (bar) | 215 | 215 | 245 | 352 | 260 |
| Die temperature ($^0$C) | 215 | 215 | 215 | 215 | 215 |

The following tests have been carried out on the layered films produced:

Shrinkage

Film structure shrinkage was measured at 160 °C in oil bath. The transverse (TD) shrinkage was found to 11% for CE1 and 21% for CE2. The inventive examples (IE1a, IE2a and IE3, all 60 micron films) exhibited between 15% to 20% and the 45 micron films IE1b and IE2b exhibited 13% and 10% respectively. TD-shrinkage which is commonly acceptable in the market is in the range of 8% to 15%. MD-shrinkage was in the range of 75 to 80% for all collation shrink film samples and all samples had comparable results.

Optical Properties

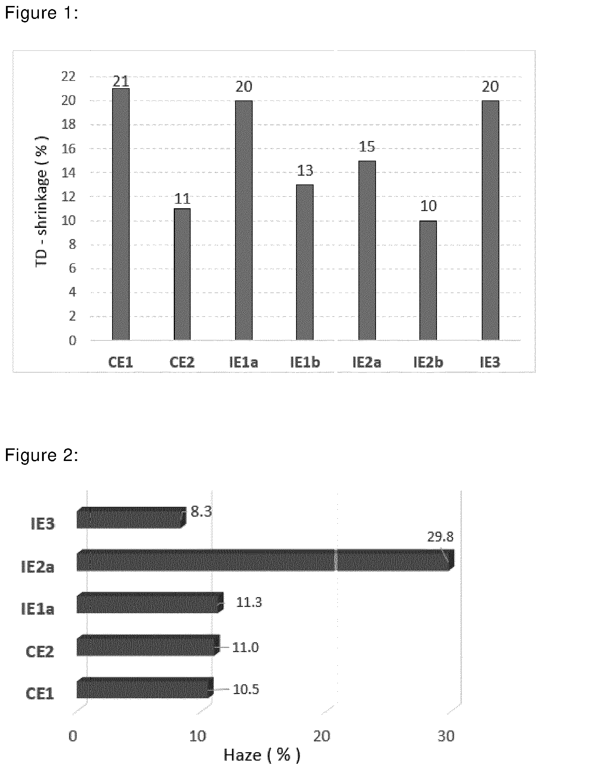

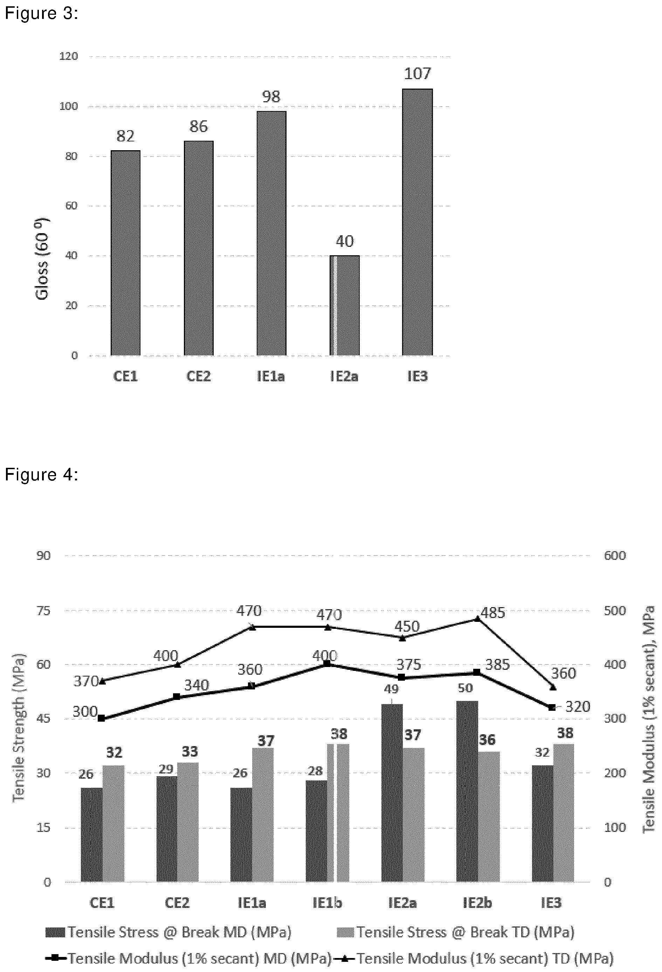

Haze and gloss@60° was measured on all 60 micron films. As shown in Figure 2 and Figure 3, IE1 and IE3 showed superior gloss and lower haze values compared to both comparative examples. The gloss was measured at 60° as per ASTM D 2457 and very good gloss in both inventive examples IE1 and IE3 are observed by combination of multimodal ethylene terpolymer of component (BC1) and/or (BE1) preferably added with LDPE (component AE) in the external layers.

IE2, which was specifically designed for matt finish requirements, had higher haze and lower gloss. This shows that the inventive films have good optical properties which can be fine-tuned according to the desired final product properties.

Mechanical Properties

Mechanical properties were tested on all 60 and 45 micron films.

As shown in Figure 4, the inventive examples showed higher tensile modulus and tensile strength, and even the down-gauged 45 micron films have superior properties compared to those of the comparative examples. The inventive films furthermore have better stiffness (tensile modulus in MD of 320 - 500 MPa).

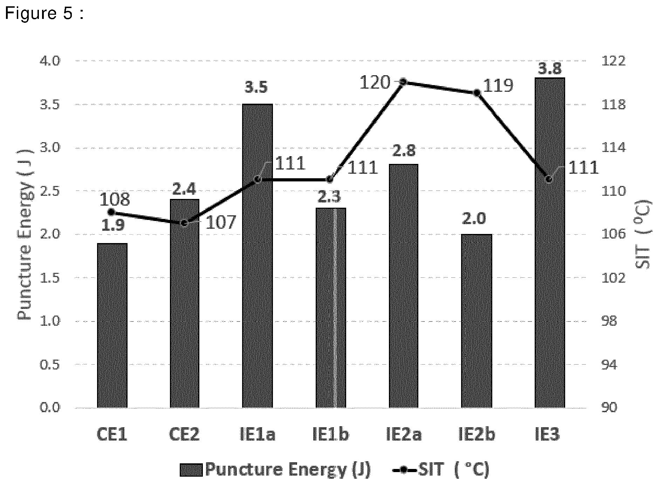

Figure 5 shows that the films according to the invention have much superior puncture resistance and good heat resistance (higher SIT - seal initiation temperature in the range of 110 - 120 $^0$C) so that the films of the invention used as collation shrink films have better packaging efficiency in the shrink tunnels.

**Claims**

1.  A layered film structure comprising a core layer C and external layers E1 and E2 wherein core layer C comprises

> a) a high-pressure produced polyethylene component (AC) which is a LDPE having an $MFR_2$ determined according to ISO 1133 of from 0.25 to 2 g/10min and a density of 0.915 to 0.930 g/cm$^3$ in an amount of from 40 to 80 wt.% of the core layer and
> b) a catalytically produced polyethylene component (BC) which is either a ethylene polymer having an $MFR_2$ determined according to ISO 1133 of from 0.5 to 10 g/10min and a density of 0.910 to 0.935 g/cm$^3$ (BC1) and/or an ethylene polymer having an $MFR_2$ determined according to ISO 1133 of from 0.05 to 0.4 g/10min and a density of 0.925 to 0.945 g/cm$^3$ (BC2) in a total amount of from 20 to 40 wt.% of the core layer, and
> c) a catalytically produced polyethylene component (CC) which is a polyethylene having an $MFR_2$ determined according to ISO 1133 of from 0.2 to 2 g/10min and a density of from 0.950 to 0.970 g/cm$^3$ in an amount of from 0 to 30 wt.% of the core layer,

and wherein external layer(s) E1 and/or E2 comprise(s)

> a) a high-pressure produced polyethylene component (AE) which is a LDPE having an $MFR_2$ determined according to ISO 1133 of from 0.25 to 2 g/10min and a density of 0.915 to 0.930 g/cm$^3$, and

b) a catalytically produced polyethylene component (BE) which is either a multimodal ethylene terpolymer having an $MFR_2$ determined according to ISO 1133 of from 0.5 to 10 g/10min and a density of 0.920 to 0.933 g/cm$^3$ (BE1) and/or an ethylene polymer having an $MFR_2$ determined according to ISO 1133 of from 0.05 to 0.4 g/10min and a density of 0.925 to 0.945 g/cm$^3$ (BE2) in a total amount of from 40 to 85 wt.% of the external layer.

2. Film structure according to claim 1 wherein ethylene polymer component BC1 is a multimodal ethylene terpolymer.

3. Film structure according to claim 1 or 2 wherein the multimodal ethylene terpolymer of component (BC1) and/or (BE1) independently comprises a multimodal polymer of ethylene with at least two different comonomers selected from alpha-olefins having from 4 to 10 carbon atoms, which has a ratio $MFR_{21}/MFR_2$ of 13 to 30 and a MWD of 5 or less, determined by Gel Permeation Chromatography (GPC) according to ISO 16014-1:2003, ISO 16014-2:2003, ISO 16014-4:2003 and ASTM D 6474-12.

4. Film structure according to any one of the preceding claims wherein the film structure has a thickness of 75 micrometer or lower.

5. Film structure according to any one of the preceding claims wherein core layer C has a thickness making up 50 to 70 % of the total film structure thickness and/or wherein external layer(s) E1 and/or E2 has/have a thickness making up 15 to 25 % of the total film structure thickness.

6. Film structure according to any one of the preceding claims wherein external layers E1 and E2 have the same composition.

7. Film structure according to any one of the preceding claims wherein the film structure has a tensile modulus in machine direction measured according to ISO 527-3 of 320 to 500 MPa and/or wherein the film structure has a tensile strength at break measured according to ISO 527-3 in transverse direction of at least 35 MPa.

8. Film structure according to any one of the preceding claims wherein the film structure has a puncture resistance measured as a puncture energy on a 60 micrometer thick film of at least 2.5 J, determined according to ASTM D5748 on 60/45 micron blown films, as described herein.

9. Film structure according to any one of the preceding claims wherein the film structure has a seal initiation temperature of from 105 to 125 °C, preferably from 109 °C to 123 °C, determined according to ASTM F 2029 and ASTM F 88, as described herein.

10. Film structure according to any one of the preceding claims wherein the film structure has a shrinkage in oil at 160 °C in transverse direction measured on a 60 micrometer thick film of 10 % or higher, determined according to ISO 11501, as described herein.

11. Film structure according to any one of the preceding claims wherein the film structure further comprises one or more intermediate layer(s) in between core layer C and one of external layers E1 and/or E2.

12. A process for producing a film structure according to any one of the preceding claims wherein the layers of the film structure are co-extruded.

13. A collation shrink film comprising a film structure according to any one of claims 1 to 11.

14. Use of a collation shrink film according to claim 13 for wrapping of articles.

**Patentansprüche**

1. Mehrschichtige Folienstruktur, umfassend eine Kernschicht C und Außenschichten E1 und E2, wobei die Kernschicht C umfasst

a) eine unter Hochdruck hergestellte Polyethylenkomponente (AC), welche ein LDPE mit einem $MFR_2$ von 0,25 bis 2 g/10 min, bestimmt gemäß ISO 1133, und einer Dichte von 0,915 bis 0,930 g/cm$^3$ ist, in einer Menge von 40 bis 80 Gew.-% der Kernschicht, und

b) eine katalytisch hergestellte Polyethylenkomponente (BC), welche entweder ein Ethylenpolymer mit einem $MFR_2$ von 0,5 bis 10 g/10 min, bestimmt gemäß ISO 1133, und einer Dichte von 0,910 bis 0,935 g/cm$^3$ (BC1) und/oder ein Ethylenpolymer mit einem $MFR_2$ von 0,05 bis 0,4 g/10 min, bestimmt gemäß ISO 1133, und einer Dichte von 0,925 bis 0,945 g/cm$^3$ (BC2) ist, in einer Gesamtmenge von 20 bis 40 Gew.-% der Kernschicht, und

c) eine katalytisch hergestellte Polyethylenkomponente (CC), welche ein Polyethylen mit einem $MFR_2$ von 0,2 bis 2 g/10 min, bestimmt gemäß ISO 1133, und einer Dichte von 0,950 bis 0,970 g/cm$^3$ ist, in einer Menge von 0 bis 30 Gew.-% der Kernschicht,

und wobei die Außenschicht(en) E1 und/oder E2 umfasst/umfassen

a) eine unter Hochdruck hergestellte Polyethylenkomponente (AE), welche ein LDPE mit einem $MFR_2$ von 0,25 bis 2 g/10 min, bestimmt gemäß ISO 1133, und einer Dichte von 0,915 bis 0,930 g/cm$^3$ ist, und

b) eine katalytisch hergestellte Polyethylenkomponente (BE), welche entweder ein multimodales Ethylen-Terpolymer mit einem $MFR_2$ von 0,5 bis 10 g/10 min, bestimmt gemäß ISO 1133, und einer Dichte von 0,920 bis 0,933 g/cm$^3$ (BE1) und/oder ein Ethylenpolymer mit einem $MFR_2$ von 0,05 bis 0,4 g/10 min, bestimmt gemäß ISO 1133, und einer Dichte von 0,925 bis 0,945 g/cm$^3$ (BE2) ist, in einer Gesamtmenge von 40 bis 85 Gew.-% der Außenschicht.

2.  Folienstruktur nach Anspruch 1, wobei die Ethylenpolymerkomponente BC1 ein multimodales Ethylen-Terpolymer ist.

3.  Folienstruktur nach Anspruch 1 oder 2, wobei das multimodale Ethylen-Terpolymer der Komponente (BC1) und/oder (BE1) unabhängig ein multimodales Polymer von Ethylen mit mindestens zwei verschiedenen Comonomeren umfasst, die aus Alpha-Olefinen mit 4 bis 10 Kohlenstoffatomen ausgewählt sind, und welches ein Verhältnis $MFR_{21}/MFR_2$ von 13 bis 30 und eine MWD von 5 oder weniger aufweist, bestimmt durch Gelpermeationschromatographie (GPC) gemäß ISO 16014-1:2003, ISO 16014-2:2003, ISO 16014-4:2003 und ASTM D 6474-12.

4.  Folienstruktur nach einem der vorstehenden Ansprüche, wobei die Folienstruktur eine Dicke von 75 Mikrometer oder weniger aufweist.

5.  Folienstruktur nach einem der vorstehenden Ansprüche, wobei die Kernschicht C eine Dicke aufweist, die 50 bis 70 % der Gesamtdicke der Folienstruktur ausmacht, und/oder wobei die Außenschicht(en) E1 und/oder E2 eine Dicke aufweist/aufweisen, die 15 bis 25 % der Gesamtdicke der Folienstruktur ausmacht.

6.  Folienstruktur nach einem der vorstehenden Ansprüche, wobei die Außenschichten E1 und E2 die gleiche Zusammensetzung aufweisen.

7.  Folienstruktur nach einem der vorstehenden Ansprüche, wobei die Folienstruktur einen Zugmodul in Maschinenrichtung von 320 bis 500 MPa, gemessen gemäß ISO 527-3, aufweist und/oder wobei die Folienstruktur eine Zugfestigkeit bei Bruch in Querrichtung von mindestens 35 MPa aufweist, gemessen gemäß ISO 527-3.

8.  Folienstruktur nach einem der vorstehenden Ansprüche, wobei die Folienstruktur eine Durchstoßfestigkeit von mindestens 2,5 J aufweist, gemessen als eine Durchstoßenergie an einer 60 Mikrometer dicken Folie und bestimmt gemäß ASTM D5748 an 60/45-Mikron-Blasfolien, wie hierin beschrieben.

9.  Folienstruktur nach einem der vorstehenden Ansprüche, wobei die Folienstruktur eine Siegelinitiierungstemperatur von 105 bis 125 °C, vorzugsweise von 109 °C bis 123 °C, aufweist, bestimmt gemäß ASTM F 2029 und ASTM F 88, wie hierin beschrieben.

10. Folienstruktur nach einem der vorstehenden Ansprüche, wobei die Folienstruktur eine Schrumpfung in Öl bei 160 °C in Querrichtung von 10 % oder mehr aufweist, gemessen an einer 60 Mikrometer dicken Folie und bestimmt gemäß ISO 11501, wie hierin beschrieben.

11. Folienstruktur nach einem der vorstehenden Ansprüche, wobei die Folienstruktur ferner eine oder mehrere Zwischenschicht(en) zwischen der Kernschicht C und einer der Außenschichten E1 und/oder E2 umfasst.

12. Verfahren zur Herstellung einer Folienstruktur nach einem der vorstehenden Ansprüche, wobei die Schichten der Folienstruktur coextrudiert werden.

13. Sammelsschrumpffolie, die eine Folienstruktur nach einem der Ansprüche 1 bis 11 umfasst.

14. Verwendung einer Sammelsschrumpffolie nach Anspruch 13 zum Umhüllen von Artikeln.

**Revendications**

1. Structure de film en couches comprenant une couche centrale C et des couches externes E1 et E2 dans laquelle la couche centrale C comprend

    a) un constituant polyéthylène produit à haute pression (AC) qui est un LDPE ayant un $MFR_2$ déterminé conformément à ISO 1133 de 0,25 à 2 g/10 min et une masse volumique de 0,915 à 0,930 g/cm$^3$ dans une proportion de 40 à 80 % en poids de la couche centrale et
    b) un constituant polyéthylène produit de manière catalytique (BC) qui est un polymère d'éthylène ayant un $MFR_2$ déterminé conformément à ISO 1133 de 0,5 à 10 g/10 min et une masse volumique de 0,910 à 0,935 g/cm$^3$ (BC1) et/ou un polymère d'éthylène ayant un $MFR_2$ déterminé conformément à ISO 1133 de 0,05 à 0,4 g/10 min et une masse volumique de 0,925 à 0,945 g/cm$^3$ (BC2) dans une proportion totale de 20 à 40 % en poids de la couche centrale, et
    c) un constituant polyéthylène produit de manière catalytique (CC) qui est un polyéthylène ayant un $MFR_2$ déterminé conformément à ISO 1133 de 0,2 à 2 g/10 min et une masse volumique de 0,950 à 0,970 g/cm$^3$ dans une proportion de 0 à 30 % en poids de la couche centrale,

    et dans laquelle la ou les couches externes E1 et/ou E2 comprennent

    a) un constituant polyéthylène produit à haute pression (AE) qui est un LDPE ayant un $MFR_2$ déterminé conformément à ISO 1133 de 0,25 à 2 g/10 min et une masse volumique de 0,915 à 0,930 g/cm$^3$, et
    b) un constituant polyéthylène produit de manière catalytique (BE) qui est un terpolymère d'éthylène multimodal ayant un $MFR_2$ déterminé conformément à ISO 1133 de 0,5 à 10 g/10 min et une masse volumique de 0,920 à 0,933 g/cm$^3$ (BE1) et/ou un polymère d'éthylène ayant un $MFR_2$ déterminé conformément à ISO 1133 de 0,05 à 0,4 g/10 min et une masse volumique de 0,925 à 0,945 g/cm$^3$ (BE2) dans une proportion totale de 40 à 85 % en poids de la couche externe.

2. Structure de film selon la revendication 1 dans laquelle le constituant polymère d'éthylène BC1 est un terpolymère d'éthylène multimodal.

3. Structure de film selon la revendication 1 ou 2 dans laquelle le terpolymère d'éthylène multimodal du constituant (BC1) et/ou (BE1) comprend indépendamment un polymère multimodal d'éthylène avec au moins deux comonomères différents choisis parmi des alpha-oléfines ayant 4 à 10 atomes de carbone, qui a un rapport $MFR_{21}/MFR_2$ de 13 à 30 et une MWD de 5 ou moins, déterminée par chromatographie à perméation de gel (GPC) conformément à ISO 16014-1:2003, ISO 16014-2:2003, ISO 16014-4:2003 et ASTM D 6474-12.

4. Structure de film selon l'une quelconque des revendications précédentes dans laquelle la structure de film a une épaisseur de 75 micromètres ou moins.

5. Structure de film selon l'une quelconque des revendications précédentes dans laquelle la couche centrale C a une épaisseur représentant 50 à 70 % de l'épaisseur totale de la structure de film et/ou dans laquelle la ou les couches externes E1 et/ou E2 ont une épaisseur représentant 15 à 25 % de l'épaisseur totale de la structure de film.

6. Structure de film selon l'une quelconque des revendications précédentes dans laquelle les couches externes E1 et E2 ont la même composition.

7. Structure de film selon l'une quelconque des revendications précédentes dans laquelle la structure de film a un module de traction dans la direction de la machine mesuré conformément à ISO 527-3 de 320 à 500 MPa et/ou dans laquelle la structure de film a une résistance à la traction à la rupture mesurée conformément à ISO 527-3 dans la direction transversale d'au moins 35 MPa.

8. Structure de film selon l'une quelconque des revendications précédentes dans laquelle la structure de film a une résistance à la perforation mesurée en tant qu'énergie de perforation sur un film de 60 micromètres d'épaisseur d'au moins 2,5 J, déterminée conformément à ASTM D5748 sur des films soufflés de 60/45 microns, comme décrit dans la présente invention.

9. Structure de film selon l'une quelconque des revendications précédentes dans laquelle la structure de film a une température d'initiation de scellement de 105 à 125 °C, de préférence de 109 °C à 123 °C, déterminée conformément à ASTM F 2029 et ASTM F 88, comme décrit dans la présente invention.

10. Structure de film selon l'une quelconque des revendications précédentes dans laquelle la structure de film a un taux de retrait dans l'huile à 160 °C dans la direction transversale mesuré sur un film de 60 micromètres d'épaisseur de 10 % ou plus, déterminé conformément à ISO 11501, comme décrit dans la présente invention.

11. Structure de film selon l'une quelconque des revendications précédentes dans laquelle la structure de film comprend une ou plusieurs couches intermédiaires entre la couche centrale C et l'une des couches externes E1 et/ou E2.

12. Procédé de production d'une structure de film selon l'une quelconque des revendications précédentes dans laquelle les couches de la structure de film sont co-extrudées.

13. Film rétractable de regroupement comprenant une structure de film selon l'une quelconque des revendications 1 à 11.

14. Utilisation d'un film rétractable de regroupement selon la revendication 13 pour l'emballage d'articles.

Figure 1:

Figure 2:

Figure 3:

Figure 4:

Figure 5 :

**REFERENCES CITED IN THE DESCRIPTION**

**Patent documents cited in the description**

- WO 2017055174 A
- WO 2016177621 A
- WO 2020207940 A1
- WO 2016083208 A